Europäisches Patentamt

European Patent Office

Office européen des brevets

(19)

(11) **EP 0 855 309 B1**

(12) **FASCICULE DE BREVET EUROPEEN**

(45) Date de publication et mention
de la délivrance du brevet:
**17.10.2001 Bulletin 2001/42**

(51) Int Cl.⁷: **B60N 2/44**

(21) Numéro de dépôt: **98400129.7**

(22) Date de dépôt: **22.01.1998**

(54) **Procédé de fabrication d'une structure de dossier de siège pour véhicules automobiles**

Verfahren zum Herstellen einer Rückenlehnestruktur für Kraftfahrzeuge

Method of manufacturing a seat backrest structure for automotive vehicles

(84) Etats contractants désignés:
**DE FR**

(30) Priorité: **23.01.1997 FR 9700678**

(43) Date de publication de la demande:
**29.07.1998 Bulletin 1998/31**

(73) Titulaire: **PEGUFORM FRANCE**
**27950 Saint Marcel (FR)**

(72) Inventeurs:
 • **Chervin, Christophe**
  **63550 Saint-Remi-Sur-Durolle (FR)**
 • **Hochet, Nicolas**
  **49220 Le Lion d'Angers (FR)**

(74) Mandataire: **Schrimpf, Robert**
**Cabinet Regimbeau**
**20, rue de Chazelles**
**75847 Paris cedex 17 (FR)**

(56) Documents cités:
**EP-A- 0 254 363**     **DE-A- 3 520 803**
**DE-A- 3 643 540**     **DE-A- 4 015 156**

 • **PATENT ABSTRACTS OF JAPAN vol. 018, no. 451 (C-1241), 23 août 1994 & JP 06 141946 A (NIPPON STEEL CHEM CO LTD;OTHERS: 01), 24 mai 1994,**

**Description**

La présente invention concerne un procédé de réalisation d'une structure de dossier de siège pour véhicules automobiles.

Elle concerne également une structure de dossier de siège pour véhicules automobiles réalisée par un tel procédé.

On entend ici par siège, un siège simple à une place ou bien un siège multiple au moins à deux places, appelé communément banquette.

Qu'il soit simple ou multiple, le siège de véhicules automobiles comprend deux parties, un dossier et une assise, chacune des deux parties étant constituée par quatre éléments de base, la structure, la matelassure, le revêtement et la fixation. Le siège comporte également des éléments optionnels tels que l'accoudoir, appuis tête, les ceintures de sécurité ou encore le siège bébé.

La présente invention vise essentiellement la structure du dossier de siège de véhicules automobiles, et notamment la structure d'un dossier de siège rabattable.

L'agencement des sièges arrière des véhicules automobiles consiste généralement en une banquette rabattable, cette banquette peut être d'un seul tenant ou encore en deux parties constituées par une banquette 2/3 (à deux places) et une banquette 1/3 (à une place). Il peut être également prévu à l'arrière de l'habitacle du véhicule une série de deux ou trois sièges à une place rabattables ou non.

Le fait que le siège soit rabattable permet d'étendre si besoin est le volume du coffre à l'arrière de l'habitacle du véhicule automobile, et d'accéder par l'arrière de l'habitacle au coffre.

Le dossier de la banquette 2/3 rabattable comprend, dans sa partie basse deux charnières d'articulation sur la carrosserie du véhicule, ces deux charnières étant positionnées sur les côtés extérieur et intérieur du dossier et permettant son rabattement vers l'avant, et dans une région située en haut sur le côté externe dudit dossier, un point d'ancrage de celui-ci sur la carrosserie du véhicule pour son maintien en position verticale. Le dossier de la banquette 1/3 comprend en partie basse, également sur les côtés externe et interne, deux charnières d'articulation sur la carrosserie du véhicule automobile, pour son rabattement vers l'avant et un point d'accrochage sur un montant du véhicule placé dans une zone située en haut sur le côté externe du dossier.

Les fonctions traditionnelles d'une structure de dossier de siège arrière rabattable d'un véhicule automobile, comprennent le soutien de la partie du poids du corps appliqué par le dos du passager sur le dossier, l'assurance de la continuité du plancher du coffre lorsque tout ou partie du dossier de siège est rabattu, la protection des passagers de l'intrusion des objets placés dans le coffre lors d'un accident ou d'un freinage brutal, la matérialisation d'une séparation visuelle entre l'habitacle et le coffre, la participation à l'isolation phonique entre le coffre et l'habitacle du véhicule, l'accueil de la matelassure et la fixation du revêtement du dossier.

En outre, le schéma classique des ceintures de sécurité arrière d'un véhicule automobile, présente sur les côtés droit et gauche des ceintures de sécurité à trois points d'ancrage, et au milieu une ceinture simple à seulement deux points d'ancrage, l'ensemble des points d'ancrage des ceintures de sécurité étant situé sur des éléments structurels de la carrosserie du véhicule automobile.

Cette configuration de ceintures précitées pose un problème majeur relatif à la sécurité du passager se trouvant au milieu.

En effet, la ceinture de sécurité du milieu attachée en seulement deux points d'ancrage ne permet pas de maintenir en place sur son siège le passager en cas de choc violent.

Pour résoudre le problème mentionné ci-dessus, il est actuellement envisagé d'embarquer dans la structure du dossier de banquette arrière, un point d'ancrage situé en partie supérieure du côté interne dudit dossier de manière opposée à son point d'accrochage sur la carrosserie du véhicule, pour permettre l'installation à la place arrière du milieu d'une ceinture de sécurité à trois points d'ancrage de la même manière que pour les places arrière droite et gauche.

Plus généralement, la tendance actuelle dans le domaine de la construction des sièges de véhicules automobiles, est de fabriquer des sièges simples ou multiples qui sont des systèmes autonomes. Le fait que le siège soit une entité autonome autorise notamment une plus grande modularité de l'habitacle du véhicule automobile.

Le siège autonome doit permettre d'assurer notamment la sécurité du passager à l'intérieur de l'habitacle du véhicule automobile, en embarquant le système d'accrochage des ceintures (points d'ancrage supérieurs prévus dans la structure de dossier de siège) et un ou plusieurs coussin(s) gonflable(s) en cas de choc par exemple.

Il est alors nécessaire que la structure du siège et plus particulièrement sa structure de dossier présente une bonne rigidité pour qu'en cas de choc, le dossier assure une protection du ou des passager(s) assis sur le siège, en absorbant l'énergie cinétique du choc par déformation sans se rompre et éviter notamment la rupture des ancrages des ceintures de sécurité, les boucles des ceintures devant restées accessibles pour permettre le dégagement ultérieur des passagers hors de l'habitacle du véhicule automobile.

Actuellement, la structure du dossier de siège pour véhicules automobiles est réalisée par assemblage par soudure de deux tôles métalliques. Ces tôles sont embouties afin d'augmenter leur rigidité, à la forme du dossier, découpées de façon à alléger la structure finale et assemblées par une opération de soudage par point.

En outre, elles sont prélablement percées afin de permettre la réception des accessoires tels que par exemple les accoudoirs.

Sur la structure du dossier, on place sans collage ni mode de fixation particulier, une matelassure puis à l'aide d'un jonc périphérique on fixe le revêtement sur le dossier.

Le cas échéant, on monte un accoudoir, un ou plusieurs appui(s) têtes ou encore un siège bébé.

La tôle apparaît comme nécessaire (on ne peut pas envisager un simple cadre rigidifié sur lequel on fixe la matelassure) pour éviter en cas de choc l'intrusion malencontreuse des bagages situés dans le coffre, dans l'habitacle du véhicule.

En outre, pour que la structure du dossier de siège réalisée en tôle métallique puisse remplir les fonctions traditionnelles mentionnées précédemment, et présenter une bonne rigidité pour embarquer au moins un point d'ancrage d'une ceinture de sécurité, il faut que l'épaisseur des tôles constituant la structure du dossier soit non négligeable, et que des renforts métalliques soient ajoutés sur lesdites tôles de structure.

La tendance actuelle est d'utiliser des aciers de plus en plus performants et éventuellement en plus des renforts métalliques, d'augmenter l'épaisseur de façon locale à des endroits bien déterminés de la structure du dossier de siège.

Ceci a pour conséquence, d'augmenter le poids final du dossier, la structure métallique nue du dossier d'une banquette 2/3 pouvant atteindre environ un poids de 9 kilos. Ceci implique un coût de fabrication du dossier important, et pose des problèmes de manutention desdites structures lourdes sur les chaînes de fabrication des sièges.

En outre, le poids élevé des structures de dossier de siège implique une élévation du poids global du véhicule automobile et de ce fait, une augmentation de la consommation dudit véhicule et une augmentation de l'énergie cinétique des dossiers en cas de choc.

Par ailleurs, il a aussi été envisagé de réaliser des structures de dossier de siège pour véhicules automobiles, en un matériau thermoplastique renforcé estampable sur une base polypropylène.

Selon un tel procédé, une moquette de polypropylène est insérée dans un moule de thermocompression et assemblée avec le matériau thermoplastique renforcé estampable lors du pressage.

Cette technique utilise la capacité de fluage du matériau thermoplastique renforcé estampable qui vient alors remplir les rainures du moule pour réaliser une structure de dossier de siège qui est identique à celle réalisée en tôles métalliques embouties sans pouvoir s'affranchir des inconvénients précités de la technique de réalisation de la structure métallique, c'est-à-dire l'élimination des nervures, des surépaisseurs locales, pour obtenir une structure de dossier de siège qui réponde aux spécificités requises notamment en ce qui concerne la bonne rigidité.

La structure de dossier de siège réalisée en matériau thermoplastique renforcé estampable sur une base polypropylène présente alors un coût de fabrication élevé ne la rendant pas viable économiquement.

Enfin, on connaît du document EP - 0 254 363 un procédé pour réaliser un panneau de structure d'un véhicule automobile, conforme au préambule de la revendication 1 et en particulier, un dossier inclinable, selon lequel une âme en mousse de plastique est positionnée dans la cavité d'un moule entre deux couches réalisées en matière thermoplastique renforcée par des fibres de verre longues, positionnées aléatoirement, et selon lequel on presse le sandwich ainsi formé, sous haute température de sorte que les couches supérieure et inférieure en plastique renforcé fusionnent ensemble pour renfermer l'âme en mousse de plastique.

Afin de pallier les inconvénients de l'état de la technique précité, la présente invention propose un nouveau procédé pour la réalisation d'une structure de dossier de siège pour véhicules automobiles présentant un poids réduit et une bonne rigidité nécessaire pour assurer la protection des passagers assis sur ledit siège et notamment pour pouvoir embarquer au moins un point d'ancrage d'une ceinture de sécurité à trois points.

Plus particulièrement, selon l'invention, le procédé est caractérisé en ce que, dans un moule de formage, on presse sous une pression comprise entre 10 et 30 bars, un panneau comprenant au moins une première et deuxième peaux préalablement chauffées, lesdites peaux étant constituées par un tissu de fils comprenant des fibres de verre noyées dans un matériau thermoplastique tel que du polypropylène, et présentant un grammage compris approximativement entre 1700 et 2000 g/m2, et une âme alvéolaire en matériau thermoplastique prise en sandwich entre les première et deuxième peaux, de manière à former une structure de dossier de siège dont l'épaisseur est comprise entre environ 21 mm et 26 mm.

Ainsi, un tel procédé permet de fabriquer une structure de dossier de siège d'un poids relativement faible (de l'ordre de 4 kg pour un dossier de banquette 2/3) qui assure les fonctions traditionnelles du dossier de siège décrites précédemment ainsi que la protection vis-à-vis des chocs ou freinages brutaux des passagers à l'intérieur de l'habitacle du véhicule automobile.

En particulier, la rigidité de la structure obtenue par le procédé selon l'invention est telle que, comme cela sera décrit plus en détail ultérieurement, elle permet d'embarquer au moins un point d'ancrage d'une ceinture de sécurité trois points et d'absorber l'énergie cinétique de l'occupant et du dossier de siège lors d'un accident ou d'un freinage brutal dudit véhicule automobile.

Selon un mode de réalisation préférentiel du procédé conforme à la présente invention selon lequel on réalise une structure de dossier de siège comportant un point d'ancrage pour une ceinture de sécurité, les première et deuxième peaux utilisées sont constituées par un tissu équilibré, dans lequel les fils sont orientés à plus ou moins 45 degrés par rapport aux axes longitudinal et transversal de ladite structure.

On entend ici par équilibré, un tissu dans lequel il y a autant de fils dans une direction que dans l'autre (autant de fils de trame que de fils de chaîne).

En outre, selon une variante du mode de réalisation préférentiel précité du procédé selon l'invention, selon lequel on réalise une structure de dossier de siège comportant un point d'ancrage pour une ceinture de sécurité, les première et deuxième peaux utilisées sont constituées par un tissu équilibré, dans lequel les fils sont orientés à 0 et 90 degrés par rapport aux axes longitudinal et transversal de ladite structure.

Comme cela sera décrit ultérieurement, en effet la résistance spécifique aux efforts propres à la structure du dossier de siège est conditionnée surtout par l'orientation des fils et leur équilibrage dans le tissu des première et deuxième peaux du panneau composite constituant ladite structure.

Selon un autre mode de réalisation du procédé selon l'invention, les première et deuxième peaux utilisées sont constituées par un tissu 4x1.

On entend par tissu 4x1, un tissu dans lequel il y a un fils de trame pour 4 fils de chaîne.

Ce mode de réalisation est particulièrement adapté à la réalisation d'une structure de dossier de siège qui n'embarque pas de point d'ancrage de ceinture de sécurité.

Avantageusement, conformément au procédé selon l'invention, préalablement au pressage dudit panneau, on chauffe dans un four un pré-assemblage constitué par l'empilement d'au moins la première peau, de l'âme alvéolaire et de la deuxième peau, à une température d'environ 500°C pendant une durée d'environ 80 secondes pour qu'en sortie du four, les première et deuxième peaux présentent une température de formage d'environ 260°C.

Le taux de compression du panneau selon le procédé conforme à l'invention est préférentiellement d'environ 2%.

En outre, selon une caractéristique particulièrement avantageuse du procédé conforme à la présente invention, le moule de formage utilisé est agencé de sorte que lors du pressage du panneau composite du type sandwich, on forme sur la première face de la structure ainsi formée une zone de surface courbe qui présente un rayon de courbure inférieure à l'épaisseur de ladite structure et sur la deuxième face de celle-ci un renfoncement s'étendant en direction de la première face et au voisinage de la zone de surface courbe.

Plus particulièrement, le renfoncement est formé de manière adjacente à un bord de la structure ainsi formée, ce bord étant replié à 90 degrés et présentant une épaisseur inférieure à l'épaisseur de ladite structure.

Ce renfoncement forme une gouttière sur un ou plusieurs bord(s) de la structure réalisée selon le procédé conforme à la présente invention, qui permet avantageusement la fixation du revêtement et/ou de la matelassure recouvrant la structure du dossier.

La présente invention propose également une structure de dossier de siège pour véhicules automobiles caractérisée en ce qu'elle est avantageusement réalisée conformément au procédé précité selon l'invention.

La description qui va suivre en regard des dessins annexés, donnés à titre d'exemples non limitatifs, fera bien comprendre en quoi consiste l'invention et comment elle peut être réalisée.

Sur les figures annexées :

- la figure 1 est une vue schématique de face d'une structure de dossier de banquette arrière 2/3 conforme à l'invention, ladite structure comprenant un point supérieur d'ancrage de ceinture de sécurité,
- la figure 2 est une vue schématique de face de structure de dossier de banquette arrière 2/3 et d'une banquette 1/3 selon l'invention,
- la figure 3 est une vue schématique de face d'une structure de dossier de banquette arrière 3 places selon l'invention, et
- la figure 4 représente un histogramme montrant les moyennes des efforts de traction maximum obtenus pour chaque type d'éprouvettes testées.
- la figure 5 est un tableau de caractéristiques d'un jeu d'éprouvettes de test,
- la figure 6 est un tableau de résultats d'essais effectués sur le jeu d'éprouvettes présenté dans le tableau de la figure 5.

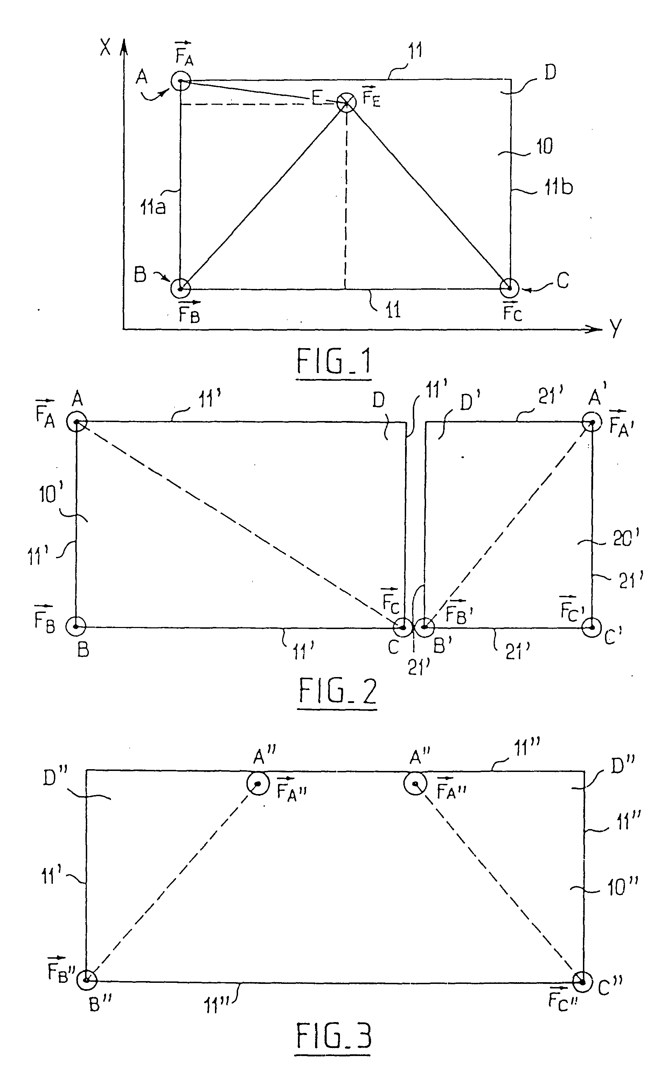

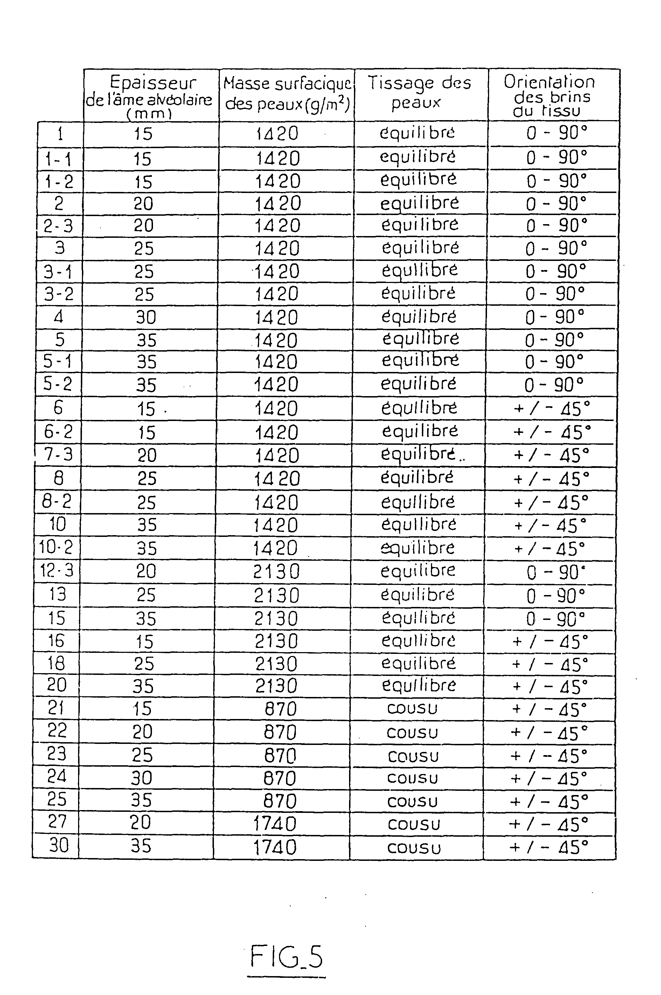

Sur la figure 1, on a représenté de manière schématique une structure 10 d'un dossier d'une banquette 2/3 (à deux places) rabattable destinée à être positionnée à l'arrière d'un véhicule automobile, à côté d'une banquette 1/3.

Cette structure 10 de dossier est destinée à être fixée à la carrosserie du véhicule automobile d'une part dans sa partie basse par l'intermédiaire de deux charnières d'articulation situées au point B sur le côté externe 11a et au point C sur le côté interne 11b de ladite structure de dossier de banquette, et d'autre part, en partie supérieure par un système de verrouillage situé au point A sur le côté externe 11a de ladite structure. Le coin interne supérieur D de la structure 10 n'est pas fixé.

Cette structure 10 de dossier de banquette 2/3 rabattable comprend en outre un point d'ancrage E, situé en partie médiane supérieure de ladite structure 10, pour un enrouleur d'une ceinture de sécurité à trois points d'accrochage, destinée au passager du milieu. Les deux points d'ancrage inférieurs (non représentés) de ladite ceinture de sécurité du milieu sont prévus sur la carrosserie du véhicule automobile.

La figure 2 représente un schéma de structure de dossier de sièges arrière d'un véhicule automobile, qui comprend une structure 10' de dossier d'une banquette 2/3 (à deux places) rabattable fixée à la carrosserie du véhicule d'une part en partie inférieure par deux charnières d'articulation situées aux deux coins inférieurs externe B et interne C de la structure de dossier de banquette, et d'autre part en partie supérieure par un système de verrouillage situé sur le coin externe supérieur A, le coin interne supérieur D de la structure de dossier restant libre. En outre, selon le schéma représenté sur la figure 2, il est prévu une structure 20' de dossier d'une banquette 1/3 placée à côté de la structure 10' de dossier de banquette 2/3, fixée à la carrosserie du véhicule automobile, en partie basse par deux charnières d'articulation situées aux coins inférieurs externe B' et interne C' de la structure de dossier de ladite banquette, et en partie supérieure par un système de verrouillage situé au coin externe supérieur A' de la structure 20' de dossier de ladite banquette. Le coin interne supérieur D' de la structure 20' reste libre, non fixé.

La figure 3, représente schématiquement une structure 10" de dossier d'une banquette arrière trois places pour véhicules automobiles qui est fixée à la carrosserie dudit véhicule en partie basse par deux charnières d'articulation, une charnière extérieure située au coin externe inférieur B" de ladite structure, une charnière intérieure située au coin interne inférieur C" de ladite structure, et en partie supérieure par deux systèmes de verrouillage situés au tiers et aux deux tiers A" de la longueur de ladite structure de dossier de banquette.

Il est à noter que selon les modes de réalisation représentés sur les figures 2 et 3, les structures 10', 20' et 10" de dossier ne comportent pas de point d'ancrage pour une ceinture de sécurité.

Chacune des structures 10, 10', 20" et 10" représentées est réalisée, selon le procédé conforme à la présente invention, par pressage dans un moule de formage sous une pression comprise entre 10 et 30 bars, d'un panneau composite de type sandwich constitué par un empilement d'au moins une première peau, une âme alvéolaire en matériau thermoplastique et une deuxième peau, les première et deuxième peaux étant constituées par un tissu de fils comprenant des fibres de verre noyées dans un matériau thermoplastique tel que du polypropylène et présentant un grammage (masse surfacique) compris approximativement entre 1700 et 2200 gr/m2. L'âme alvéolaire utilisée présente par exemple une structure nid d'abeilles à parois fines ou encore une structure tubulaire, à base de polypropylène. Lesdites première et deuxième peaux sont chauffées préalablement au pressage. Le pressage est effectué de manière à former dans ledit panneau composite du type sandwich une structure de dossier 10, 10', 20", 10" dont l'épaisseur est comprise entre environ 21 mm et 26 mm. Pour ce faire, on utilise une âme alvéolaire d'épaisseur comprise entre 20 et 25 mm, et des première et deuxième peaux d'épaisseur de l'ordre du millimètre, le taux de compression dudit panneau composite lors du pressage étant d'environ 2 %.

Il est intéressant de préciser que conformément au procédé selon l'invention, le chauffage préalable des première et deuxième peaux dudit panneau composite, est réalisé avantageusement en chauffant dans un four un pré-assemblage constitué par l'empilement d'au moins la première peau, l'âme alvéolaire et la deuxième peau, à une température d'environ 500°C pendant une durée d'environ 80 secondes.

Ainsi, en sortie de four, les première et deuxième peaux présentent une température de formage d'environ 260°C.

Il convient de noter que de manière surprenante et inattendue, il est possible de placer une âme alvéolaire du type par exemple à structure nid d'abeilles à parois fines ou à structure tubulaire à base de polypropylène, pendant plusieurs dizaines de secondes dans un four dont la température est d'environ 500°C, sans pour cela détruire les caractéristiques mécaniques de l'âme alvéolaire, alors que l'on sait que le polypropylène commence à fluer sérieusement vers 115°C. Le fait de chauffer le pré-assemblage des première et deuxième peaux et de l'âme alvéolaire prise en sandwich entre celles-ci permet d'éviter toutes déperditions de chaleur dûes au transfert de chaleur entre les peaux et l'extérieur, de telles déperditions intervenant lorsque les peaux sont chauffées indépendamment de l'âme alvéolaire et assemblées à froid avec celle-ci. De telles déperditions de chaleur préjudiciable à la qualité de l'adhésion entre les différentes couches du matériau sandwich, imposent alors une augmentation de la capacité calorifique des peaux lors de leur chauffage, en utilisant des grammages p!us importants, ce qui pénalise le coût final de fabrication de telles structures en matériau composite du type sandwich.

Les structures de dossier 10, 10', 20" et 10" représentées sur les figures 1 à 3 et réalisées conformément au procédé précité, présentent un faible poids, de l'ordre de 3,8 kg pour la structure 10 au lieu de 9 kg pour une structure identique réalisée en tôles embouties, tout en comportant une bonne rigidité globale et une bonne résistance à la torsion issue de la compression des coins libres non fixés D, D' D" pour soutenir de façon satisfaisante le poids du corps transmis par le dos des passagers assis sur les sièges correspondants.

En outre, ces structures 10, 10', 20', 10" peuvent assurer le rôle de plancher du coffre lorsque le dossier de la banquette correspondante est rabattue, car elles présentent une bonne résistance en flexion sous la charge maximale que peuvent représenter les bagages.

Enfin, ces structures 10, 10', 20', 10" permettent d'assurer une protection des passagers assis sur les banquettes correspondantes.

En particulier, elles présentent une résistance suffisante au choc et une certaine capacité à absorber l'énergie cinétique des bagages situés dans le coffre du véhicule automobile en cas de choc, de façon à protéger les passagers de l'intrusion dans l'habitacle desdits bagages placés dans le coffre lors d'un choc.

De plus, la rigidité globale et la résistance à la torsion issue des efforts de tractions et de compressions exercés sur les coins libres non fixés D, D', D" respectivement des structures 10, 10', 20', 10", desdites structures 10, 10', 20', 10" sont telles qu'elles sont capables sans se rompre, d'absorber en cas de choc violent ou d'un freinage brutal du véhicule automobile :

- l'énergie cinétique de l'occupant ceinturé du milieu (pour ce qui est de la structure 10 avec le point d'ancrage E embarqué),
- leur propre énergie cinétique, et
- l'énergie cinétique des bagages situés dans le coffre du véhicule.

Selon les modes de réalisation des structures 10', 20' et 10" représentés sur les figures 2 et 3, les première et deuxième peaux utilisées pour leur fabrication selon le procédé conforme à l'invention, comprennent un tissu de fils 4x1 dans lequel pour quatre fils de chaîne orientés à 0 degrés, il y a un fils de trame orienté à 90 degrés par rapport aux fils de chaîne.

Comme nous pouvons le voir sur les figures 2 et 3, lors d'un choc (par exemple lors d'un crash test à 50 km/h) ou d'un freinage brutal du véhicule automobile les sollicitations $\vec{F_A}, \vec{F_{A'}}, \vec{F_{A''}}, \vec{F_B}, \vec{F_{B'}}, \vec{F_{B''}}, \vec{F_C}, \vec{F_{C'}}, \vec{F_{C''}}$ (forces de traction dirigées en direction du lecteur) appliquées respectivement aux points de fixation A, A', A", B, B', B", C, C', C", des structures 10', 20', et 10", sont dûes essentiellement au poids du dossier de la banquette correspondante et aux chocs aléatoires des bagages contre le dossier de ladite banquette. Ces sollicitations déforment lesdites structures 10', 20' et 10" essentiellement en flexion.

Les lignes dites de flexion (matérialisées en lignes pointillées sur les figures 2 et 3) marquent les endroits où les structures sont susceptibles de plier.

On constate sur les figures 2 et 3 que pour les structures 10', 20' et 10" ces lignes de flexion sont des diagonales orientées sensiblement à +/- 45 degrés par rapport à la verticale desdites structures.

En dehors des lignes de flexion, il n'y a pas de sollicitation générant des lignes particulières de traction.

Ainsi, il est possible de choisir pour la fabrication desdites structures 10', 20' et 10" selon le procédé conforme à l'invention, un panneau composite du type sandwich dans lequel les première et deuxième peaux comportent un tissu de fils 4x1, et présentent un grammage compris entre 1700 et 2200 g/m2 (plus proche de 1700 g/m2) pour un tissu comprenant 60 % de fibres de verre, avec une épaisseur d'âme alvéolaire au minimum égale à 20 mm et au maximum égale à 25 mm pour obtenir après compression, des structures d'épaisseur comprise entre 21 et 26 mm.

De telles structures 10', 20' et 10" ainsi obtenues présentent alors, comme nous l'avons déjà dit précédemment, toutes les spécificités requises précitées en matière de résistance à la flexion, à la torsion et de rigidité globale.

Selon le mode de réalisation représenté sur la figure 1, la structure 10 comporte en outre un point d'ancrage supérieur médian E pour un enrouleur d'une ceinture de sécurité. En cas de choc, les points sollicités de ladite structure 10 sont alors clairement identifiés.

Il s'agit comme le montre la figure 1, du point A du système de verrouillage sur lequel s'exerce la force de traction $\vec{F_A}$ (dirigée en direction du lecteur), des points B et C des charnières d'articulation externe et interne sur lesquelles s'exercent les forces de traction $\vec{F_B}$ et $\vec{F_C}$ (dirigées en direction du lecteur), et du point d'ancrage supérieur E de l'enrouleur de la ceinture de sécurité sur lequel s'exerce la force de traction $\vec{F_E}$ (dirigée en éloignement du lecteur).

Ainsi, lors d'un choc dynamique, les efforts sont concentrés sur les quatre points précités et se transmettent entre ces points suivant des lignes de tension maximale (matérialisées en trait plein sur la figure 1) et des lignes de flexion maximale (matérialisées en trait pointillé sur la figure 1).

Les lignes de tension apparaissent entre les points A et E ; B et E ; C et E auxquels s'appliquent des efforts de sens antagonistes. Les lignes de flexion sont globalement perpendiculaires aux lignes reliant les points auxquels s'appliquent des efforts de sens identique, elles passent par le point d'ancrage supérieur, le seul dont le sens de la sollicitation $\vec{F_E}$ (force de traction) est inverse aux autres. Ces lignes de flexion marquent les endroits où la structure 10 est susceptible de plier le plus.

Comme on peut le voir sur la figure 1, ces lignes de tension et de flexion sont globalement orientées à 0 degrés, +/-45 degrés, et 90 degrés. C'est l'interaction de ces lignes entre elles qui va conditionner la déformation de ladite structure, et donc l'orientation des fils du tissu constituent les première et deuxième peaux du panneau composite dans lequel elle est formée pour qu'elle résiste correctement à la déformation.

Par ailleurs, il a été constaté que la rigidité globale de la structure 10 tout comme celle des structures 10', 20' et 10", est assurée par l'épaisseur après thermocompression du couple âme alvéolaire - première et deuxième peaux. Comme nous l'avons déjà dit précédemment, les valeurs de l'épaisseur de ce couple sont encadrées par une valeur minimale de 21 mm dont 20 mm pour l'épaisseur d'âme alvéolaire (plus approprié en cas des structures 10', 20' et 10") et une valeur maximale de 26 mm dont 25 mm pour l'épaisseur d'âme alvéolaire (cas de la structure 10 conformément aux résultats d'essais décrits ultérieurement).

Cette valeur maximale d'épaisseur de structure de 26 mm est conditionnée par des questions d'encombrement physique. En outre, cette épaisseur maximale est conditionnée par le procédé de thermocompression lui-même. En effet, si l'épaisseur de l'âme alvéolaire et l'épaisseur des peaux sont trop importantes, on observe alors des limitations de la diffusion de la chaleur à l'interface peau-âme alvéolaire, provoquant une dégradation par excès de chauffage de la surface des peaux, alors que la surface de l'âme alvéolaire reste insuffisamment chauffée.

En outre, l'épaisseur de la structure de dossier de siège et par conséquent du panneau composite à structure sandwich dans lequel elle est formée, est liée au grammage des peaux.

On estime dans le cas de la structure 10 de la figure 1 que le grammage des première et deuxième peaux utilisées est avantageusement compris entre 1700 et 2200 g/m2 pour un tissu comprenant 60 % de fibres de verre. Comme on le verra dans les résultats d'essais décrits ultérieurement, le grammage préférentiel des peaux est proche de la valeur supérieure de 2200 g/m2 et plus particulièrement est égale à 2130 g/m2.

La résistance spécifique aux efforts propres à la structure 10 du dossier de la banquette 2/3 de la figure 1, est conditionnée par sa rigidité globale mais surtout par l'orientation des fils et leur équilibrage dans le tissu constituant les première et deuxième peaux du panneau composite à structure sandwich dans lequel elle est formée selon le procédé conforme à la présente invention.

Comme nous l'avons vu précédemment, puisqu'il n'y a pas de direction non symétrique privilégiée des lignes de tension et de flexion (c'est-à-dire autre que 0 degrés, +/- 45 degrés, et 90 degrés), il s'est révélé que le tissu le plus approprié pour les première et deuxième peaux de la structure 10 est un tissu équilibré. C'est-à-dire un tissu dans lequel il y a autant de fils dans une direction que dans l'autre.

On peut alors utiliser un panneau composite du type sandwich dans lequel des première et deuxième peaux comportent un tissu équilibré dans lequel les fils sont orientés à 0 et 90 degrés, ou un tissu équilibré dans lequel les fils sont orientés à +/- 45 degrés par rapport aux axes longitudinal Y et transversal X dudit panneau, c'est-à-dire ici de ladite structure.

Ainsi, lors d'un choc dynamique, la structure 10 bien qu'elle soit déformée, comporte des charnières d'articulation qui ne doivent pas avoir rompu, un système de verrouillage placé sur le coin supérieur extérieur qui n'a pas lâché, il est accepté cependant que son fonctionnement soit affecté par le choc.

En outre, la structure du dossier 10 et les charnières d'articulation ne doivent pas présenter d'amorce de rupture et en particulier aux abords des points de liaison entre la structure et les charnières elles-mêmes.

Les déformations subies par la structure 10 ne doivent pas présenter de risque pour les passagers assis sur la banquette correspondante. En particulier, il a été déterminé pour que les passagers soient préservés que la déformation du coin interne libre D de la structure 10 doit être inférieure à 350 mm.

Les boucles de ceinture de sécurité doivent restées accessibles après le choc et la déformation des éléments ne doit pas gêner l'accès à l'intérieur du véhicule.

Une série d'essais a été réalisée sur des éprouvettes.

Le jeu d'éprouvettes testées est constitué de 32 types d'éprouvettes différentes présentés dans le tableau de la figure 5,avec cinq exemplaires de chaque type, soit 165 éprouvettes. Sur les cinq exemplaires de chaque type d'éprouvettes, trois exemplaires annotés B, C, et D dans le tableau de la figure 6 ont été testés soit 96 éprouvettes sur chacun des 32 types d'éprouvettes en présence.

Les éprouvettes ont été découpées dans un panneau composite plan à la taille du dossier d'une banquette 2/3 arrière rabattable du type de la structure 10.

L'essai consiste à exercer un effort de traction verticale grâce à un palan électrique sur chacune des éprouvettes, à la position du point d'ancrage supérieur E de la ceinture de sécurité. Un premier capteur (capteur I) est fixé sur le bâti de support du palan, d'une part et au point de traction sur l'envers de l'éprouvette à tester d'autre part. Il doit mesurer le déplacement du point de traction. Un second capteur (capteur II) est fixé sur le bâti de support du palan d'une part, et au niveau du coin libre D sur l'envers de l'éprouvette à tester d'autre part, il doit mesurer le déplacement du coin libre non fixé de la structure.

En outre, un capteur d'efforts est intercalé entre le crochet du palan et l'éprouvette à tester de manière à mesurer l'effort de traction.

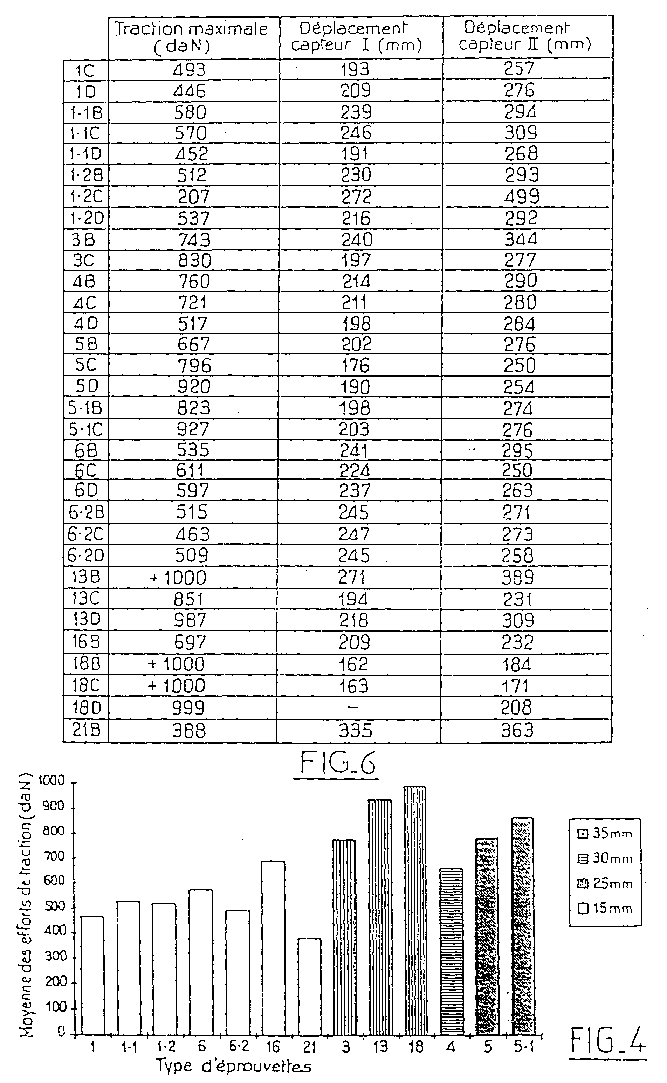

Les résultats d'essais sont présentés dans le tableau de la figure 6, et sur la figure 4.

Comme on peut le constater, cette série d'essais confirme les bons niveaux de performance d'un panneau composite sandwich à âme alvéolaire du type n°18 dans lequel l'âme alvéolaire présente une épaisseur de 25 mm, et les première et deuxième peaux comprennent un tissu de fils équilibré à +/- 45 degrés avec un grammage de 2130 g/m2.

Les éprouvettes du type n°18 présentent un excellent comportement en traction. En effet, elles résistent en moyenne à un effort en traction supérieur à 10 000 Newton pour un déplacement moyen du coin libre d'environ 190 mm.

Nous rappelons que la limite en matière de déformation du coin libre de la structure 10 est fixée à 350 mm. En outre, la valeur minimale de l'effort de traction auquel doit résister une structure du type structure 10, est fixée à 10 000 Newton.

La série d'éprouvettes du type n°13 avec une épaisseur d'âme alvéolaire de 25 mm, des première et seconde peaux comportant un tissu équilibré à 0 et 90 degrés d'orientation des fils et de grammage de 2130 g/m2, présente elle aussi de bons résultats avec une résistance à un effort moyen de traction supérieur à 10 000 Newton pour un déplacement moyen du coin libre d'environ 300 millimètres.

Par ailleurs, il est intéressant de souligner que conformément au procédé selon l'invention, le moule de formage utilisé est agencé de sorte que lors du pressage dudit panneau composite du type sandwich, on forme sur la première face de la structure 10, 10', 20', 10" une zone de surface courbe qui présente un rayon de courbure inférieure à l'épaisseur de la structure formée et sur la deuxième face de celle-ci, un renfoncement s'étendant en direction de la première face et au voisinage de la zone de surface courbe.

Le renfoncement est formé de manière adjacente à un bord 11, 11a, 11b, 11', 21', 11" de ladite structure 10, 10', 20', 10", ce bord étant replié à 90 degrés présente une épaisseur inférieure à l'épaisseur de la structure correspondante.

Ainsi, ce renfoncement se présente sous la forme d'une gouttière qui avantageusement, peut permettre la fixation de la matelassure et/ou du revêtement du dossier sur la structure considérée.

## Revendications

1. Procédé de réalisation d'une structure (10 ; 10', 20'; 10") de dossier de siège pour véhicules automobiles, où, dans un moule de formage, on presse sous une pression, un panneau comprenant au moins une première et deuxième peaux préalablement chauffées, lesdites peaux étant constituées par un tissu de fils comprenant des fibres de verre noyées dans un matériau thermoplastique tel que du polypropylène, et une âme alvéolaire en matériau thermoplastique prise en sandwich entre les première et deuxième peaux, de manière à former une structure (10 ; 10', 20'; 10") de dossier de siège, **caractérisé en ce que** :

   - la pression est comprise entre 10 et 30 bars,
   - le tissu présente un grammage compris approximativement entre 1700 et 2200 g/m2,
   - l'épaisseur dudit dossier de siège est comprise entre environ 21 mm et 26 mm.

2. Procédé selon la revendication 1, selon lequel on réalise une structure (10) de dossier de siège comportant un point d'ancrage (E) pour une ceinture de sécurité, **caractérisé en ce que** les première et deuxième peaux utilisées sont constituées par un tissu équilibré, dans lequel les fils sont orientés à plus ou moins 45 degrés par rapport aux axes longitudinal et transversal (Y, X) de ladite structure (10).

3. Procédé selon la revendication 1, selon lequel on réalise une structure (10) de dossier de siège comportant un point d'ancrage (E) pour une ceinture de sécurité, **caractérisé en ce que** les première et deuxième peaux utilisées sont constituées par un tissu équilibré, dans lequel les fils sont orientés à 0 et 90 degrés par rapport aux axes longitudinal et transversal (Y, X) de ladite structure (10).

4. Procédé selon l'une des revendications 2 ou 3, **caractérisé en ce qu'**on utilise des première et deuxième peaux constituées par un tissu de grammage égal à 2130 g/m2 et une âme alvéolaire d'épaisseur 25 mm.

5. Procédé selon la revendication 1, **caractérisé en ce que** les première et deuxième peaux utilisées sont constituées par un tissu ayant un fil de trame pour quatre fils de chaîne.

6. Procédé selon l'une quelconque des revendications 1 à 5, **caractérisé en ce que** préalablement au pressage dudit panneau, on chauffe dans un four un pré-assemblage constitué par l'empilement d'au moins la première peau, de l'âme alvéolaire et de la deuxième peau, à une température d'environ 500°C pendant une durée d'environ 80 secondes pour qu'en sortie du four, les première et deuxième peaux présentent une température de formage d'environ 260°C.

7. Procédé selon l'une quelconque des revendications 1 à 6, **caractérisé en ce que** le taux de compression dudit panneau est d'environ 2%.

8. Procédé selon l'une quelconque des revendications 1 à 7, **caractérisé en ce que** le moule de formage utilisé est agencé de sorte que lors du pressage dudit panneau composite du type sandwich, on forme sur la première face de la structure ainsi formée une zone de surface courbe qui présente un rayon de courbure inférieure à l'épaisseur de ladite structure et sur la deuxième face de celle-ci un renfoncement s'étendant en direction de la première face et au voisinage de la zone de surface courbe.

9. Procédé selon la revendication 8, **caractérisé en ce que** le renfoncement est formé de manière adjacente à un bord (11; 11', 21'; 11") de ladite structure (10 10', 20'; 10") ainsi formée, ce bord étant replié à 90 degrés et présentant une épaisseur inférieure à l'épaisseur de ladite structure.

10. Structure (10 ; 10', 20' ; 10") de dossier de siège pour véhicules automobiles, **caractérisée en ce qu'**elle est susceptible d'être obtenu par le procédé selon l'une quelconque des revendications 1 à 9.

## Patentansprüche

1. Verfahren zum Herstellen einer Sitzlehnenstruktur (10; 10', 20'; 10") für Kraftfahrzeuge, wo man in einer Form zum Abformen unter Druck eine Platte preßt, die mindestens eine erste und eine zweite Haut, die vorher erwärmt wurden, wobei die genannten Häute von einem textilen Flächengebilde bzw. Gewebe aus Fäden gebildet sind, die Glasfasern umfassen, die in ein thermoplastisches Material wie Polypropylen eingelassen sind, und eine blasige Seele aus thermoplastischem Material umfaßt, die sandwichartig zwischen der ersten und zweiten Haut aufgenommen ist, um auf diese Weise eine Sitzlehnenstruktur (10; 10', 20'; 10") zu bilden, **dadurch gekennzeichnet, daß**

- der Druck zwischen 10 und 30 bar liegt,
- das textile Flächengebilde eine Flächenmasse aufweist, die etwa zwischen 1700 und 2200 g/m$^2$ liegt, und
- die Dicke der genannten Sitzlehne zwischen etwa 21 mm und 26 mm liegt.

2. Verfahren nach Anspruch 1, gemäß dem man eine Sitzlehnenstruktur (10) herstellt, die einen Verankerungspunkt (E) für einen Sicherheitsgurt aufweist, **dadurch gekennzeichnet, daß** die verwendete erste und zweite Haut von einem ausgeglichenen Gewebe gebildet sind, in dem die Fäden unter mehr oder weniger 45 Grad in Bezug auf die Längs- und Querachse (Y, X) der genannten Struktur (10) ausgerichtet sind.

3. Verfahren nach Anspruch 1, gemäß dem man eine Sitzlehnenstruktur (10) herstellt, die einen Verankerungspunkt (E) für einen Sicherheitsgurt aufweist, **dadurch gekennzeichnet, daß** die verwendete erste und zweite Haut von einem ausgeglichenen Gewebe gebildet sind, in dem die Fäden unter 0 und 90 Grad in Bezug auf die Längs- und Querachse (Y, X) der genannten Struktur (10) ausgerichtet sind.

4. Verfahren nach einem der Ansprüche 2 oder 3, **dadurch gekennzeichnet, daß** man erste und zweite Häute, die von einem Gewebe mit einem Flächengewicht gebildet sind, das 2130 g/m$^2$ beträgt, und eine blasige Seele mit einer Dicke von 25 mm verwendet.

5. Verfahren nach Anspruch 1, **dadurch gekennzeichnet, daß** die verwendete erste und zweite Haut von einem Gewebe gebildet sind, das einen Schußfaden pro vier Kettfäden aufweist.

6. Verfahren nach einem der Ansprüche 1 bis 5, **dadurch gekennzeichnet, daß** man vor dem Pressen der genannten Platte in einem Ofen ein Vorab-Gebilde, das aus einem Stapel aus mindestens der ersten Haut, der blasigen Seele und der zweiten Haut gebildet ist, bei einer Temperatur von etwa 500°C während einer Dauer von etwa 80 Sekunden erwärmt, so daß am Ausgang des Ofens die erste und zweite Haut eine Formungstemperatur von etwa 260°C darbieten.

7. Verfahren nach einem der Ansprüche 1 bis 6, **dadurch gekennzeichnet, daß** der Grad der Zusammenpressung der genannten Platte etwa 2% beträgt.

8. Verfahren nach einem der Ansprüche 1 bis 7, **dadurch gekennzeichnet, daß** die verwendete Form zum Abformen derart ausgelegt ist, daß man während des Pressens der genannten Sandwich-Verbundplatte auf der ersten Stirnfläche der so gebildeten Struktur eine geschwungene Oberflächenzone, die einen Krümmungsradius darbietet, der kleiner ist als die Dicke der genannten Struktur, und auf deren zweiter Stirnfläche eine Vertiefung bildet, die sich in Richtung der ersten Fläche und in der Nähe der geschwungenen Oberfläche erstreckt.

9. Verfahren nach Anspruch 8, **dadurch gekennzeichnet, daß** die Vertiefung auf eine solche Weise gebildet ist, daß sie an einen Rand (11; 11', 21'; 11") der genannten, so gebildeten Struktur (10; 10', 20'; 10") angrenzt, wobei dieser Rand um 90 Grad umgeschlagen ist und eine Dicke darbietet, die geringer ist als die Dicke der genannten Struktur.

10. Sitzlehnenstruktur (10; 10', 20'; 10") für Kraftfahrzeuge, **dadurch gekennzeichnet, daß** sie geeignet ist, durch das Verfahren nach irgendeinem der Ansprüche 1 bis 9 erhalten zu werden.

**Claims**

1. A method of making a motor vehicle seat back structure (10; 10', 20'; 10") in which a panel is pressed under pressure in a forming mold, the panel comprising at least first and second previously-heated skins, said skins being constituted by a fabric of yarn comprising glass fibers embedded in a thermoplastic material such as polypropylene, the panel also comprising a cellular core of thermoplastic material sandwiched between the first and second skins so as to form a seat back structure (10; 10', 20'; 10"), the method being **characterized in that**:

· the pressure lies in the range 10 bars to 30 bars;
· the weight of the fabric lies in the range approximately 1700 grams per square meter (g/m$^2$) to 2200 g/m$^2$; and
· the thickness of said seat back lies in the range approximately 21 millimeters (mm) to 26 mm.

2. A method according to claim 1, in which a seat back structure (10) is made including an anchor point (E) for a safety belt, the method being **characterized in that** the first and second skins used are made of balanced fabric in which the yarn extends at $\pm 45°$ relative to the longitudinal and transverse axes (Y, X) of said structure (10).

3. A method according to claim 1, in which a seat back structure (10) is made including an anchor point (E) for a safety belt, the method being **characterized in that** the first and second skins used are made of balanced fabric in which the yarns are oriented at 0° and at 90° relative to the longitudinal and transverse axes (Y, X) of said structure (10).

4. A method according to claim 2 or 3, **characterized in that** first and second skins are used that are made of fabric of weight equal to 2130 $g/m^2$ and a cellular core is used of thickness equal to 25 mm.

5. A method according to claim 1, **characterized in that** the first and second skins used are constituted by a fabric having one weft thread for every four warp threads.

6. A method according to any one of claims 1 to 5, **characterized in that** prior to pressing said panel, a pre-assembly constituted by a stack of at least the first skin, the cellular core, and the second skin is heated in an oven to a temperature of about 500°C for a duration of about 80 seconds so that on leaving the oven, the first and second skins present a forming temperature of about 260°C.

7. A method according to any one of claims 1 to 6, **characterized in that** the compression ratio of said panel is about 2%.

8. A method according to any one of claims 1 to 7, **characterized in that** the forming mold used is arranged in such a manner that during pressing of said sandwich type composite panel, a curved surface zone is formed on the first face of the structure formed in this way, which zone presents a radius of curvature that is less than the thickness of said structure, and a setback is formed in the second face thereof extending towards the first face and in the vicinity of the curved surface zone.

9. A method according to claim 8, **characterized in that** the setback is formed adjacent to an edge (11; 11', 21'; 11") of said structure (10; 10', 20'; 10") formed in this way, the edge being folded through 90° and presenting thickness that is less than the thickness of said structure.

10. A motor vehicle seat back structure (10; 10', 20'; 10"), **characterized in that** it is capable of being obtained by the method according to any one of claims 1 to 9.

FIG_1

FIG_2

FIG_3

|  | Epaisseur de l'âme alvéolaire (mm) | Masse surfacique des peaux (g/m²) | Tissage des peaux | Orientation des brins du tissu |
|---|---|---|---|---|
| 1 | 15 | 1420 | équilibré | 0 - 90° |
| 1-1 | 15 | 1420 | equilibré | 0 - 90° |
| 1-2 | 15 | 1420 | équilibré | 0 - 90° |
| 2 | 20 | 1420 | equilibré | 0 - 90° |
| 2-3 | 20 | 1420 | équilibré | 0 - 90° |
| 3 | 25 | 1420 | équilibré | 0 - 90° |
| 3-1 | 25 | 1420 | équilibré | 0 - 90° |
| 3-2 | 25 | 1420 | équilibré | 0 - 90° |
| 4 | 30 | 1420 | équilibré | 0 - 90° |
| 5 | 35 | 1420 | équilibré | 0 - 90° |
| 5-1 | 35 | 1420 | équilibré | 0 - 90° |
| 5-2 | 35 | 1420 | équilibré | 0 - 90° |
| 6 | 15 | 1420 | équilibré | + / - 45° |
| 6-2 | 15 | 1420 | équilibré | + / - 45° |
| 7-3 | 20 | 1420 | équilibré | + / - 45° |
| 8 | 25 | 1420 | équilibré | + / - 45° |
| 8-2 | 25 | 1420 | équilibré | + / - 45° |
| 10 | 35 | 1420 | équilibré | + / - 45° |
| 10-2 | 35 | 1420 | équilibre | + / - 45° |
| 12-3 | 20 | 2130 | equilibre | 0 - 90° |
| 13 | 25 | 2130 | équilibré | 0 - 90° |
| 15 | 35 | 2130 | équilibré | 0 - 90° |
| 16 | 15 | 2130 | équilibré | + / - 45° |
| 18 | 25 | 2130 | equilibré | + / - 45° |
| 20 | 35 | 2130 | equilibre | + / - 45° |
| 21 | 15 | 870 | cousu | + / - 45° |
| 22 | 20 | 870 | cousu | + / - 45° |
| 23 | 25 | 870 | cousu | + / - 45° |
| 24 | 30 | 870 | cousu | + / - 45° |
| 25 | 35 | 870 | cousu | + / - 45° |
| 27 | 20 | 1740 | cousu | + / - 45° |
| 30 | 35 | 1740 | cousu | + / - 45° |

FIG_5

| | Traction maximale (daN) | Déplacement capteur I (mm) | Déplacement capteur II (mm) |
|---|---|---|---|
| 1C | 493 | 193 | 257 |
| 1D | 446 | 209 | 276 |
| 1·1B | 580 | 239 | 294 |
| 1·1C | 570 | 246 | 309 |
| 1·1D | 452 | 191 | 268 |
| 1·2B | 512 | 230 | 293 |
| 1·2C | 207 | 272 | 499 |
| 1·2D | 537 | 216 | 292 |
| 3B | 743 | 240 | 344 |
| 3C | 830 | 197 | 277 |
| 4B | 760 | 214 | 290 |
| 4C | 721 | 211 | 280 |
| 4D | 517 | 198 | 284 |
| 5B | 667 | 202 | 276 |
| 5C | 796 | 176 | 250 |
| 5D | 920 | 190 | 254 |
| 5·1B | 823 | 198 | 274 |
| 5·1C | 927 | 203 | 276 |
| 6B | 535 | 241 | 295 |
| 6C | 611 | 224 | 250 |
| 6D | 597 | 237 | 263 |
| 6·2B | 515 | 245 | 271 |
| 6·2C | 463 | 247 | 273 |
| 6·2D | 509 | 245 | 258 |
| 13B | + 1000 | 271 | 389 |
| 13C | 851 | 194 | 231 |
| 13D | 987 | 218 | 309 |
| 16B | 697 | 209 | 232 |
| 18B | + 1000 | 162 | 184 |
| 18C | + 1000 | 163 | 171 |
| 18D | 999 | – | 208 |
| 21B | 388 | 335 | 363 |

FIG_6

FIG_4